# EUROPEAN PATENT APPLICATION

(11) **EP 2 216 222 A1**
(43) Date of publication of application: **11.08.2010**
(21) Application number: 10152748.9
(22) Date of filing: 05.02.2010
(51) Int. Cl.: B60W 10/18, B60W 10/20, B60W 30/08, B60W 10/04, G08G 1/16

(54) **Method of avoiding a hazardous condition**

(30) Priority: 05.02.2009 US 366523
(71) Applicant: PACCAR INC, Bellevue, WA 98804 (US)
(72) Inventor: Mays, Wesley M., Coppell, TX 75019 (US)
(74) Representative: Körber, Martin Hans

(57) **Abstract**

A method of avoiding a hazardous condition between a first vehicle and a second vehicle, each having a safety system capable of transmitting and receiving safety data, includes monitoring a set of vehicle safety data of the first vehicle, the set of safety data being obtained by a plurality of sensors associated with the first vehicle; determining at the first vehicle the presence of a vehicle maneuver of either the first or second vehicle that may result in a hazardous condition; and signalling the vehicle operator of the first vehicle and/or the second vehicle of the hazardous conditon.

## Description

### BACKGROUND

People are more mobile than ever before. The number of cars, trucks, buses, recreational vehicles, and sport utility vehicles (collectively "automobiles") on the road appears to increase with each passing day. Moreover, the ongoing transportation explosion is not limited to automobiles. A wide variety of different vehicles such as automobiles, motorcycles, trains, light, medium, and heavy duty trucks, construction equipment, and other transportation devices (collectively "vehicles") are used to move people and cargo from place to place. While there are many advantages to our increasingly mobile society, there are also costs associated with the explosion in the number and variety of vehicles. Accidents are one example of such a cost. It would be desirable to reduce the number of accidents and/or severity of such accidents through the use of automated or semi-automated systems configured to identify potential hazards so that potential collisions could be avoided or mitigated.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with aspects of the present invention, a method is provided for avoiding a hazardous condition between a first vehicle and a second vehicle, wherein each of the first and second vehicle have a safety system capable of transmitting and receiving safety data. The method includes monitoring a set of vehicle safety data of the first vehicle. The set of safety data is obtained by a plurality of sensors associated with the first vehicle. The presence of a vehicle maneuver of either the first or second vehicle that may result in a hazardous condition is determined at the first vehicle. Vehicle safety data is received from the second vehicle in proximity of the first vehicle. The received data corresponds to the first vehicle maneuver. The received data and/or the set of first vehicle safety data is then processed. The processed data indicates the presence of a hazardous condition. The vehicle operator of the first vehicle and/or the second vehicle is signaled of the hazardous condition.

In accordance with another aspect of the present invention, a method is provided for avoiding a hazardous condition between a first vehicle trailing a second vehicle. Each vehicle has a safety system capable of transmitting and receiving safety data. The method includes monitoring a set of safety data of the first vehicle. The set of safety data is generated by a plurality of sensors associated with the first vehicle. Safety data from the second vehicle is received indicative of deceleration. The received data is then processed in conjunction with the set of first vehicle safety data. The processed data indicates the presence of a hazardous condition. The method further transmits a signal to the vehicle operator of the second vehicle of the hazardous condition created by the safety data received by the first vehicle so that corrective action can be taken by the second vehicle.

In accordance with another aspect of the present invention, a method is provided for avoiding a hazardous condition between a first vehicle trailing a second vehicle. Each vehicle has a safety system capable of transmitting and receiving safety data. The method includes monitoring a set of safety data of the first vehicle. The set of safety data is generated by a plurality of sensors associated with the first vehicle. Safety data is received from the second vehicle indicative of deceleration. The received data is processed in conjunction with the set of first vehicle safety data. The processed data indicates the presence of a hazardous condition. The method further transmits a signal to the vehicle operator of the first vehicle of the hazardous condition created by the safety data so that corrective action can be taken by the first vehicle.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a block diagram of one exemplary embodiment of a vehicle safety system formed in accordance with aspects of the present invention;
FIGURE 2 is a schematic diagram of one suitable vehicle in which the steering system of FIGURE 1 may be employed;
FIGURE 3 is a top view of a schematic representation of a vehicle employing the vehicle safety system of FIGURE 1;
FIGURE 4 is a flow diagram of one exemplary vehicle safety method formed in accordance with aspects of the present invention.

### DETAILED DESCRIPTION

Embodiments of the present invention will now be described with reference to the drawings where like numerals correspond to like elements. Embodiments of the present invention are generally directed to vehicle safety systems suitable for use in vehicles, such as Class 8 trucks. Although exemplary embodiments of the present invention will be described hereinafter with reference to Class 8 trucks, it will be appreciated that aspects of the present invention have wide application, and therefore, may be suitable for use with many types of electrically power, mechanically powered or hybrid powered vehicles, such as passenger vehicles, buses, commercial vehicles, etc. Accordingly, the following descriptions and illustrations herein should be considered illustrative in nature, and thus, not limiting the scope of the present invention, as claimed.

Prior to discussing the details of various aspects of the present invention, it should be understood that several sections of the following description are presented in terms of logic and operations that may be performed by conventional electronic components. These electronic components, which may be grouped in a single location or distributed over a wide area, generally include processors, memory, storage devices, display devices, input devices (e.g., sensors), etc. It will be appreciated by one skilled in the art that the logic described herein may be implemented in a variety of configurations, including software, hardware, or combinations thereof. The hardware may include but is not limited to, analog circuitry, digital circuitry, processing units, application specific integrated circuits (ASICs), and the like. In circumstances were the components are distributed, the components are accessible to each other via communication links.

In the following description, numerous specific details are set forth in order to provide a thorough understanding of exemplary embodiments of the present invention. It will be apparent to one skilled in the art, however, that many embodiments of the present invention may be practiced without some or all of the specific details. In some instances, well-known process steps have not been described in detail in order not to unnecessarily obscure various aspects of the present invention.

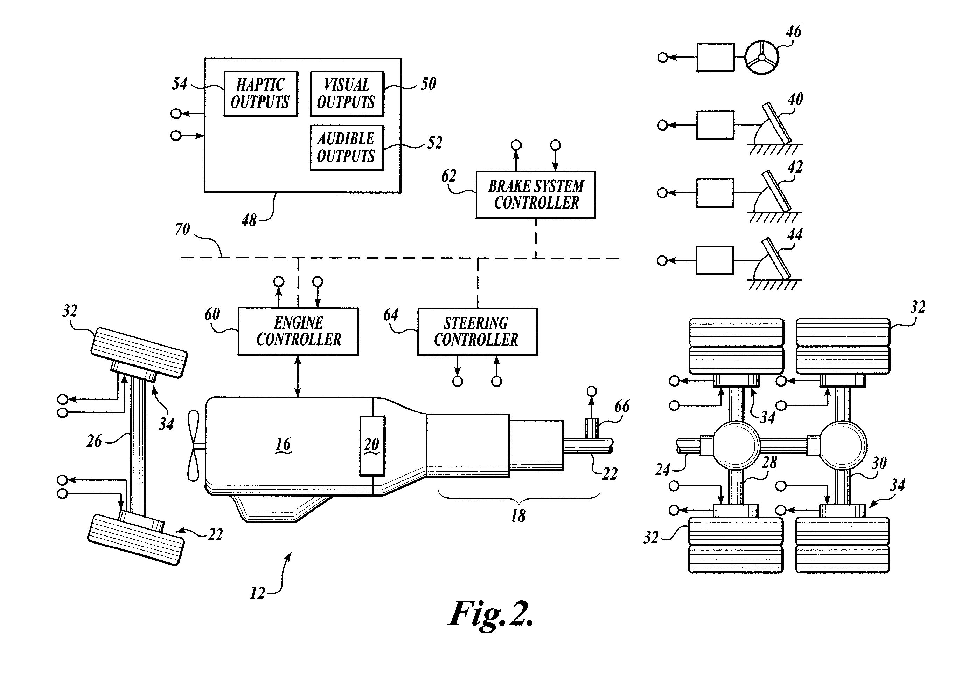

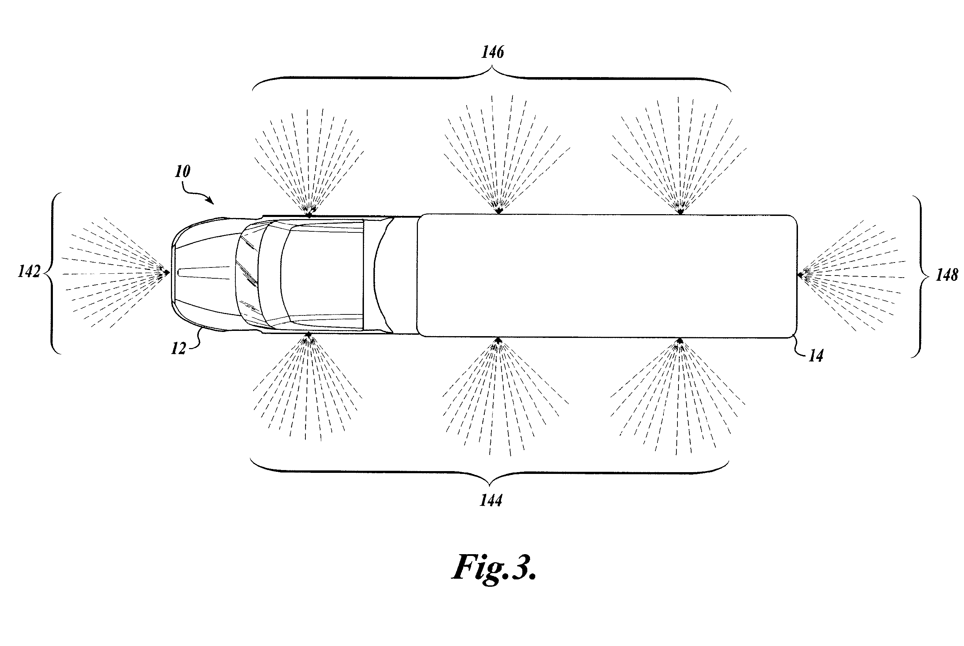

As briefly described above, embodiments of the present invention are directed to vehicle safety systems suitable for use in a vehicle. One suitable vehicle in which the vehicle safety systems may be employed will now be described in more detail with reference to FIGURE 2. As best shown in FIGURE 2, a Class 8 tractor 12 of a tractor-trailer combination 10 (hereinafter "vehicle 10" or "combination 10," see FIGURE 3), having an electronically controlled engine 16 coupled to a transmission 18 via a clutch mechanism 20 is shown. Although a vehicle such as depicted in FIGURE 2 represents one of the possible applications for the systems and methods of the present invention, it should be appreciated that aspects of the present invention transcend any particular type of vehicle.

In the embodiment shown in FIGURE 2, the transmission 18 may be an automated manual transmission or an automatic transmission that includes an output shaft 22 coupled to a vehicle drive shaft 24. The tractor 12 includes at least two axles such as a steer axle 26 and at least one drive axle, such as axles 28 and 30. Each axle supports corresponding wheels 32 having service brake components 34. The service brake components 34 may include wheel speed sensors, electronically controlled pressure valves, and the like, to effect control of the vehicle braking system.

The tractor 12 may also include conventional operator control inputs, such as an accelerator pedal 40, a service brake pedal 42, a parking brake 44, and a steering wheel 46 to effect turning of the front wheels of the vehicle 20. The tractor 12 may further include a cab mounted operator interface, which may include any of a number of output devices 48, such as visual output devices 50 (e.g., lights, displays, gauges), audible output devices 52 (e.g., speakers, headphones, etc.) and haptic feedback devices 54. The output device 48 may be stand alone, integrated with the instrument panel, with a rear view mirror or a side view mirror, mounted in, on or over a hood of the vehicle, and/or located and/or integrated with any other suitable structure in the vehicle. The cab mounted operator interface also includes various input devices (not shown), such as toggle switches, push button switches, potentiometers, or the like.

The tractor 12 is further equipped with a vehicle control system that controls several systems and subsystems of the vehicle. The vehicle control system may include a controller associated with the engine 16 ("engine controller 60"). Generally described, the engine controller 60 functions to manage various aspects of the operation of the engine 16. For example, the engine's ignition timing, fuel consumption, and the like, may be monitored and controlled by the engine controller 60. The vehicle control system may include other controllers for controlling other vehicle systems. For example, the vehicle control system may include a transmission controller (not shown) for controlling transmission shifting, a brake system controller 62 for controlling the operation of the service brake components 34, a steering controller 64 for controlling the turning of the wheels 32 of the steer axle 26.

To support this control, the various controllers communicate with each other through a vehicle-wide communications network 70, as shown in FIGURE 3. Those skilled in the art and others will recognize that the vehicle-wide communications network 70 may be implemented using any number of different communication protocols such as, but not limited to, Society of Automotive Engineers' ("SAE") J1587, SAE J1922, SAE J1939, SAE J1708, and combinations thereof. Alternatively, the aforementioned controllers may be software control modules contained within a general purpose controller residing on the vehicle. It will be appreciated, however, that the present invention is not limited to any particular type or configuration of controller, or to any specific control logic for governing operation of vehicle 10.

As used herein, controllers, control units, control modules, program modules, etc., can contain logic for carrying out general or specific operational features of the vehicle 10. The logic can be implemented in hardware components, such as analog circuitry, digital circuitry, processing units, or combinations thereof, software components having instructions which can be processed by the processing units, etc., or combinations of hardware and software. Therefore, as used herein, the term "controlling component" can be used to generally describe these aforementioned components, and can be either hardware or software, or combinations thereof, that implement logic for carrying out various aspects of the present invention.

Referring now to FIGURE 2, there is shown a block diagram of one exemplary embodiment of a vehicle safety system 100 formed in accordance with aspects of the present invention. Generally described, the vehicle safety system 100 is incorporated into a vehicle, referred to as the "host" vehicle, such as vehicle 10, whereby it monitors the host vehicle surroundings and the operational characteristics of the host vehicle in order to identify potential safety concerns or hazardous operational conditions. This may include detecting a foreign object (e.g. a target object) outside of the host vehicle that could pose a potential threat to the host vehicle. The system 100 is capable of detecting a wide variety of different target objects, including both moving and non-moving objects. For example, the target object 106 can be an oncoming vehicle (e.g., a "lead vehicle"), a vehicle in an adjacent lane (e.g., a "side vehicle"), or a vehicle approaching the host vehicle from behind (e.g., a "rear trailing vehicle"). The target object may also be a pedestrian crossing the road ahead of the host vehicle or stationary objects, such as trees, barriers, buildings, etc., on the periphery of the roadway. The system 100 is also capable of detecting other hazardous conditions, such as host vehicle roll-over conditions, jack-knife conditions, etc.

In doing so, the vehicle safety system 100 collects data from one or more sources, such as sources that generate data from the vehicle itself (e.g., internal sensors), sources that generate data from the surroundings of the vehicle (e.g., external sensors), and sources that receive data from local or remote locations with respect to the host vehicle (e.g., a satellite, telematic, cellular, short or long range RF, etc., data acquisition unit). The data received from local or remote locations can either be actively obtained (i.e., requested by the system 100) or passively obtained (i.e., transmitted to the host vehicle without request). In response to data collected by components of the system 100, the system 100 may use a hierarchical system to address the potential hazardous conditions or safety concerns. For example, in one embodiment, the system 100 first warns the host vehicle operator visually, audibly or haptically of an impending safety concern or hazard, such as a collision. The system 100 may additionally or alternatively warn the operators of vehicles in the vicinity of the host vehicle. If no corrective action is taken by the host vehicle operator, or by operators of proximate vehicles, such as leading vehicles, trailing vehicles, and side vehicles, the system 100 may enable active countermeasures, e.g., steering control, braking control, throttle control, etc. at the host vehicle for taking autonomous corrective action to mitigate the safety concern or hazard and/or enable passive countermeasures, such as the deployment of airbags, adjustment of seat restraints and head restraints, etc. In one embodiment, the system 100 may then transmit data indicative of the countermeasures employed to external sources. The external sources may include but are not limited to vehicles in proximity of the host vehicle, stationary relays located roadside, etc.

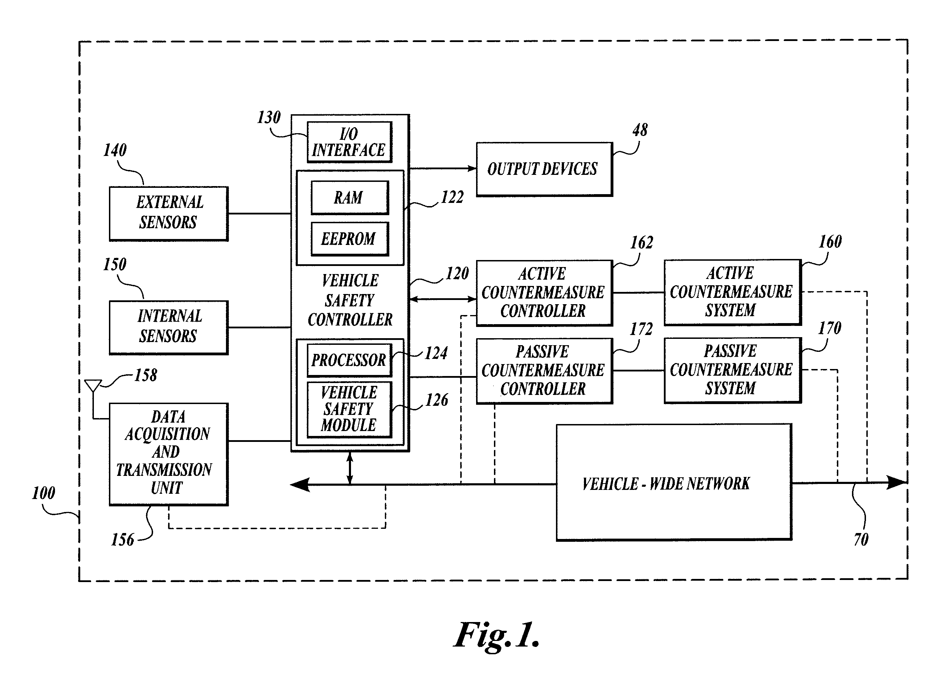

Still referring to FIGURE 1, the components of the vehicle safety system 100 will now be described in more detail. As best shown in FIGURE 1, the vehicle safety system 100 includes a vehicle safety controller 120, which may be communicatively connected to other systems of the vehicle 10 via the vehicle-wide network 70. The controller 120 and any one of the various sensors, actuators, etc., herein described may contain logic rules implemented in a variety of combinations of hardware circuitry components, software and/or programmed microprocessors, etc., to effect control of the various vehicle systems and subsystems described herein. To that end, as further illustrated in FIGURE 1, one suitable embodiment of the controller 120 includes a memory 122 with a Random Access Memory ("RAM"), an Electronically Erasable, Programmable, Read-Only Memory ("EEPROM"), and any other suitable data storage means, a processor 124, and a vehicle safety module 126 for effecting vehicle safety functionality to the vehicle. Vehicle safety functionality may include adaptive cruise control, autonomous driving, collision avoidance, collision warning, lane departure warning, lane change/merge detection, rear impact collision warning/avoidance, road condition detection, just to name a few. The processor 124 and memory 122 of the controller 120 are connected by an input/output (I/O) interface 130 to other devices and/or modules of the vehicle 10.

The vehicle safety system 100 also includes a plurality of external sensors 140 and internal sensors 150, which are connected in communication with the controller 120 either directly, wirelessly, and/or through the vehicle-wide network 70. These sensors 140 and 150 are used for various purposes including but not limited to: object detection, path prediction, environment scanning, collision assessment, passenger and/or load position assessment, and other safety purposes.

The external sensors 140 include but are not limited to radar, lidar, optical sensors, ultrasonic sensors, active and passive infrared sensors, radio frequency (RF) sensors, camera sensors, etc. In use, for example, a single or combination of the external sensors 140 is capable of generating surroundings status signals, which may, for example, contain a camera scene or an infrared scene of the environment surrounding the vehicle 10. The external sensors 140 may determine an object's relative position to the vehicle 10, an object relative velocity to the vehicle 10, and other object identification parameters known in the art. The external sensors 140 are connected to the vehicle in one or more desired sensing locations. As can be appreciated, the location and number of sensors that are used will depend upon the particular application and can be readily modified as conditions dictate. In the embodiment shown in FIGURE 3, the external sensors 140 are placed around the tractor 12 and trailer 14 of the combination 10 so as to form a forward sensing zone 142, side sensing zones 144 and 146, and a rear sensing zone 148.

The internal sensors 150 include various vehicle system sensors including brake sensors, a throttle sensor, a suspension sensor, tire pressure sensors, vehicle inertial sensor(s), a wheel speed sensor, a vehicle speed sensor, a seat belt sensor, temperature sensors, accelerometers, a steering angle sensor, etc. In accordance with aspects of the present invention, the internal sensors 150 may also include weight measurement sensors and load monitoring sensors that generate signals indicative of weight, position, etc. of vehicle passengers and/or vehicle cargo loads.

The above sensors may be used individually or in conjunction with each other. For example, the vehicle inertial sensor(s), the vehicle speed sensor, and the steering wheel angle sensor may be used in coordination to generate a signal or signals indicative of vehicle path data or vehicle trajectory data, such as traveling on or approaching a curved road. The inertial sensor(s) may allow the system 100 to determine vehicle parameters such as pitch, roll, and yaw of the vehicle 10. The inertial sensor preferably provides the yaw rate of the vehicle about the center of gravity of the vehicle. The yaw rate measures the rotational tendency of the vehicle about an axis (i.e., Z axis) normal to the surface of the road. The steering wheel angle sensor provides a steering wheel angle signal to controller 120. The steering wheel angle signal corresponds to the steering wheel angle of the steering wheel 46 of the vehicle 10. The inertial sensor(s) may also allow the system 100 to determine the roll rate and pitch rate of the vehicle 10 about the center of gravity of the vehicle or components thereof (i.e., the tractor 12, the trailer 14, etc.), and can be used to determine the center of gravity of vehicle. The roll rate and the pitch rate measure the rotational tendency of the vehicle about the X axis and Y axis, respectively. The vehicle inertial sensors may work seperately or in conjunction with other sensors, such as the weight measurement sensors, accelerometers, load monitoring sensors, etc.

The vehicle safety system 100 further includes a data acquisition and transmission unit 156 that comprises one or more transceivers 158 that receives, for example, relative vehicle location data (e.g., GPS/map data), weather data, safety data from short-range communication devices, for example, roadside relays, beacons, etc., and vehicle operational and safety data from other vehicles in the vicinity of the host vheicle. The transceivers 158 may also transmit location data, weather data, host vehicle operational and safety data, etc., to safety systems of other vehicles, stationary relays located roadside, etc.

The data acquisition and transmission unit 156 in one embodiment acts like a vehicle positioning system for identifying the relative location of the vehicle and generating vehicle position indicating signals relative to a fixed coordinate system. The data acquisition unit 156 may include a Global Positioning System (GPS) to carry out this functionality. The data acquisition unit 156 also preferably includes a position translation system that is able to identify the position of the vehicle relative to roads, cities, and/or any other criteria based on the output of the vehicle positioning system. The data acquisition unit 156 can also be a cellular based system or any other system that identifies the location of the vehicle relative to a fixed coordinate system. The data acquisition unit 156 may further include a data store having lookup information and/or other structured data and/or tables.

The data acquisition and transmission unit 156 may also compose a controller (not shown) that controls the transmission of safety data from the host vehicle, and controls the reception of data from external sources, such as local vehicles and transponders, cellular networks, and satellite networks. The reception of such data may be either passively or by active request, which can be generated at the unit controller. In other embodiments, the controller 120 can provide this functionality and others. In use, by transmitting signals to impending objects, the impending objects or operators of the impending objects may also perform collision avoidance and countermeasure actions. Similarly, armed with safety data from nearby vehicles, the system 100 of the host vehicle in conjunction with data from sensors 140 and 150 may better mitigate potential hazardous conditions.

In use, the controller 120 determines the potential for a collision between the vehicle 10 and a target object, such as the "leading vehicle" or "the side vehicle." The controller 120 gathers various data from multiple sources, such as external sensors 140, internal sensors 150, and the data acquisition and transmission unit 156, to assess the current situation that the vehicle 10 is encountering. The controller 120 may generate various object related data from the various sensors including: probability that a collision may occur, time until a potential collision may occur, point of collision, object identification, and other object related parameters; and various vehicle parameter related data sources including: vehicle path determination, road condition assessment, relative location assessment, load monitoring, roll over assessment, etc.

The controller 120, in response to data obtained by the internal sources, external sources, and the data acquisition and transmission unit 156, determines whether any action should be performed. If the system 100 determines that action should occur, in one embodiment, the controller 120 first generates a collision-warning signal or other hazardous condition warning, which is indicated to the host vehicle operator via the output devices 48 and/or to other objects, such as the operators of an adjacent, leading, or trailing vehicle, via the unit 156. For example, the controller 120 may: 1) supply warning signals, collision-related information, etc. to the host vehicle; and 2) supply external-warning signals to objects or pedestrians located outside of the host vehicle. The signals may be collision-warning data with or without other host vehicle data transmitted to vehicles in the vicinity of the host vehicle.

Other actions may also be taken at the direction of the controller 120. For example, other actions may be taken if the host vehicle operator fails to take corrective action in response to the vehicle safety system generated warnings, or if operators of surrounding vehicles fail to take corrective action. To that end, the vehicle safety system 100 further includes active and passive countermeasure systems 160 and 170, which can be controlled by active and passive countermeasure controllers 162 and 172, at the direction of the controller 120. The active countermeasure systems 160 include brake control, throttle control, steering control, suspension control, transmission control, and other chassis control systems. The active countermeasure controller 162 in response to appropriate signals from the controller 120 transmits signals to control one or more of the active countermeasures, as needed, so as to prevent a collision, injury, vehicle damage, or the like. The active countermeasure controller 162 may autonomously operate the vehicle 10 using the active countermeasure systems. The passive countermeasure systems 170 are signaled via the passive countermeasure controller 172. The passive countermeasure system 170 includes internal air bag control, seatbelt control, head restraint control, pretensioner control, etc. Air bag control may include control over front, side, curtain, hood, dash, or other type air bags. The corrective action taken by the host vehicle can then be transmitted via the unit 156 to objects in the vicinity of the host vehicle, which may be used to mitigate the same hazardous condition or subsequent hazardous conditions caused thereby.

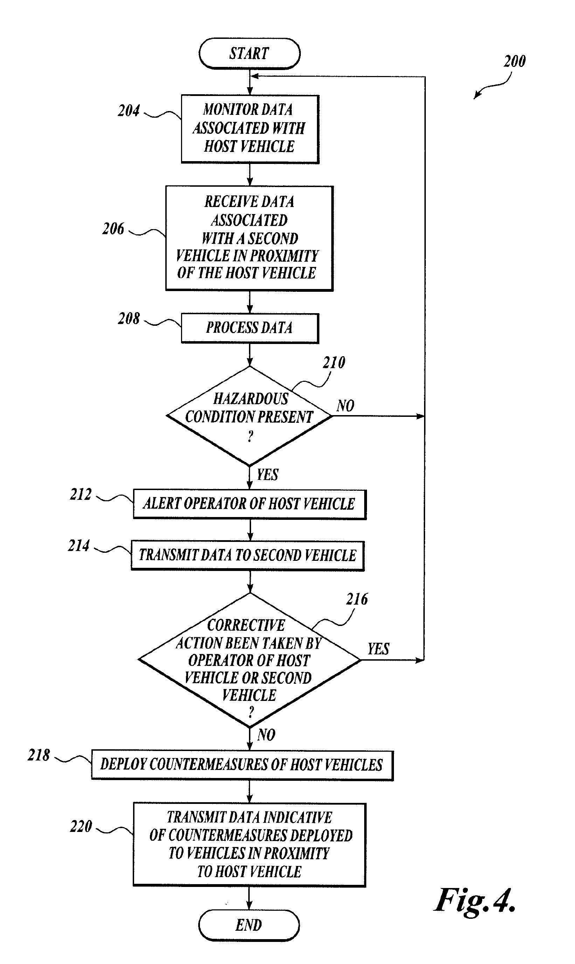

Referring now to FIGURE 4, there is shown a flow diagram of one exemplary vehicle safety method 200 implemented by the vehicle safety system 100 in accordance with aspects of the present invention. Generally described, the controller 120 continuously monitors data relating to the host vehicle from the external sensors 140, internal sensors 150, and/or other data sources, such as the data acquisition and transmission unit 156, at block 204. At block 206, the controller 120 receives data associated with a second vehicle in proximity of the host vehicle. The controller 120 can actively request the data from the second vehicle or can passively receive such data, if transmitted by the second vehicle. The controller 120 processes such data at block 208, and determines whether a hazardous condition or safety concern is present at block 210. In response to the determination that a hazardous condition or safety concern is present, the controller 120 operates under a priority system that first outputs warning signals, such as audible and/or visual signals, at block 212, to alert the host vehicle driver to the presence of unsafe or hazardous conditions and/or transmits hazardous condition warning data to the second vehicle via unit 156 at block 214. If no corrective measure is taken by the host vehicle operator or the operator of the second vehicle at block 216, the controller 120 outputs control signals to the active countermeasure system and/or passive countermeasure system of the host vehicle at block 218. For example, the controller 120 may autonomously control one or more host vehicle systems, such as the braking system, the steering system, or the engine, to alter vehicle operation, for example, vehicle braking, lane changing, etc., in the event of an impending collision or other safety hazard. The corrective action taken by the host vehicle can then be transmitted via the unit 156 to objects in the vicinity of the host vehicle at block 220, which may be used to mitigate the same hazardous condition or subsequent hazardous conditions caused thereby.

The following is one example in which the vehicle safety method is employed by the host vehicle for mitigating a potential hazardous condition or safety concern. In this example, the vehicle 10 incorporating the vehicle safety system 100, the host vehicle, is operating under normal highway conditions with vehicles in adjacent lanes (i.e., side vehicles). In this condition, the vehicle safety system 100 of the host vehicle is continuously monitoring data from the sensors 140 and 150 and data from the data acquisition and transmission unit 156, such as data from vehicles in the vicinity of the host vehicle. Next, the operator of the host vehicle decides to change lanes in the left direction. At this time, appropriate sensors 140 and 150, such as lane departure sensors, inertial sensors, and/or the turn signal indicator, detect the impending lane change. At this time, the system 100 may detect a side vehicle (a second vehicle) occupying the adjacent lane in which the operator of host vehicle is intending to move into via data generated from the appropriate sensors, such as side view cameras, radar, etc.

However, it is possible that the system 100 cannot detect which lane (e.g., immediate adjacent lane or lane further away) the side vehicle is occupying. In this example, the vehicle safety system 100 of host vehicle sends a warning signal to the side vehicle via the data acquisition and transmission unit 156 to warn the side vehicle of the impending lane change. If equipped, the vehicle safety system 100 of the side vehicle receives the warning signal and determines that the host vehicle is in the immediately adjacent lane. Based on this determination, the side vehicle transmits a collision warning signal to the host vehicle. Upon receipt of such a collision warning signal, the system 100 of host vehicle may first warn the operator of the host vehicle of the impeding collision audibly, visually, and/or haptically, via output devices if time permits, or deploys active and/or passive countermeasures to mitigate the potential collision with the side vehicle. In this example, the system 100 begins a series of active steps to obviate the hazardous condition, including, for example, de-fueling the engine or other braking actions, such as activating the brakes, to reduce vehicle speed, or may prohibit the operator from steering into the adjacent lane. If any corrective action is taken by the host vehicle, data indicative of such action can then be transmitted via the unit 156 to objects, such as the second vehicle, in the vicinity of the host vehicle.

The following is another example in which the vehicle safety method is employed by the host vehicle for mitigating a potential hazardous condition or safety concern. In this example, the vehicle 10 incorporating the vehicle safety system 100, the host vehicle, is operating under normal highway conditions and following a second vehicle, a leading vehicle, also equipped with a vehicle safety system 100. In this condition, the vehicle safety system 100 of the host vehicle is continuously monitoring data from the sensors 140 and 150 and data received from the data acquisition and transmission unit 156, such as data from the second vehicle. At this time, the second vehicle begins to decelerate, which causes the vehicle safety system 100 of the second vehicle to transmit the rate of deceleration and/or other data to the host vehicle. Using the appropriate sensors 140, such as forward looking radar and/or forward looking camera, in conjunction with the vehicle data received from the second vehicle, the vehicle safety system 100 of the host vehicle determines that a collision will occur in a predetermined amount of time if no corrective action is taken.

The system 100 of the host vehicle 10 then signals such an unsafe condition to the host vehicle operator via an audible, visual, and/or haptic warning via output devices 48, and simultaneously sends such time data and other data to other vehicles, such as a third vehicle, a trailing vehicle, following the host vehicle. Using all available data to determine the optimum response to prevent the collision, the vehicle safety system 100 of the host vehicle automatically deploys the appropriate countermeasure(s) to prevent the collision. These responses may include but are not limited to changing lanes, reducing vehicle speed through a variety of means but not limited to de-fueling the engine, applying engine brake, and applying antilock braking system, etc. The vehicle safety system 100 of the host vehicle may also transmit data indicative of countermeasures taken to at least the second vehicle and the third vehicle.

In the event that a collision is unavoidable, the vehicle safety system 100 of the host vehicle transmits that information to other vehicles in the vicinity, such as the second vehicle and/or the third vehicle via the data acquisition and transmission unit 156, and possibly an audible signal through its external horn. The vehicle safety system of the second vehicle receives this information and takes appropriate action, for example, by either pre-deploying safety systems (such as airbags, belt tensioners, etc.), changing lanes to avoid vehicle A, or accelerate to obviate the collision.

The following is yet another example in which the vehicle safety method is employed by the host vehicle for mitigating a potential hazardous condition or safety concern. In this example, the vehicle 10 incorporating the vehicle safety system 100, the host vehicle, is heavily laden with cargo to transport. As the vehicle 10 traverses a roadway, the vehicle safety system 100 continuously monitors data from the sensors 140 and 150 and data from the data acquisition and transmission unit 156. In this example, the controller 120 continuously processes various data, and determines that the center of gravity of the vehicle is rather high due to the nature of the cargo's positioning. In one embodiment, the data processed includes vehicle and cargo weight data, load monitoring data, vehicle inertial data, center of gravity data, etc.

The controller 120 also monitors other data, including vehicle speed data, vehicle path data, and determines that the vehicle 10 is either approaching a curve in the road or that the vehicle has entered a curve in the road. In one embodiment, the vehicle path data may be calculated based on vehicle inertial data, vehicle steering angle data, and/or vehicle speed data. In another embodiment, the vehicle path data is calculated by data obtained by the data acquisition and transmission unit 156, including GPS data and/or map data. Based on, for example, the processed vehicle path data, the vehicle speed, vehicle weight, and center of gravity of the vehicle, the system determines that the vehicle 10 is traveling at too high a rate of speed to safely negotiate the approaching curve.

In response to this determination, the vehicle safety system 100 first warns the operator either audibly, visually, or haptically, via output devices 48. If the vehicle operator ignores the warning or is unable to take corrective action, the vehicle safety system 100 then begins a series of active steps to obviate the hazardous condition, including, for example, de-fueling the engine or other braking actions, such as activating the brakes, to reduce vehicle speed. If these active measures are ineffective, the system, using the continuously generated data from sensors 140 and 150, monitors, for example, traffic in on-coming and adjacent lanes, and if altering the steering input will not endanger adjacent or oncoming traffic, the vehicle safety system 100 may alter the steering input to lessen the risk of a rollover or serious accident. The vehicle safety system 100 may also deploy passive countermeasures, such as seat belt restraints, air bags, etc., to mitigate the severity of the hazardous condition. The controller 120 may also direct the transmission of data indicative of the countermeasures employed to external sources via the data acquisition and transmission unit 156. The external sources may include but are not limited to vehicles in proximity of the host vehicle, stationary relays located roadside, etc.

While illustrative embodiments have been illustrated and described, it will be appreciated that various changes can be made therein without departing from the spirit and scope of the claimed subject matter.

## Claims

1. A method of avoiding a hazardous condition between a first vehicle and a second vehicle, each having a safety system capable of transmitting and receiving safety data, the method comprising the steps of:
monitoring a set of vehicle safety data of the first vehicle, the set of safety data being obtained by a plurality of sensors associated with the first vehicle;
determining at the first vehicle the presence of a vehicle maneuver of either the first or second vehicle that may result in a hazardous condition;
receiving vehicle safety data from the second vehicle in proximity of the first vehicle corresponding to the first vehicle maneuver;
processing the received data and/or the set of first vehicle safety data, the processed data indicating the presence of a hazardous condition; and
signaling the vehicle operator of the first vehicle and/or the second vehicle of the hazardous condition.

2. The method of Claim 1, further comprising the step of controlling the first vehicle to obviate or reduce the severity of the hazardous condition.

3. The method of Claim 2, wherein controlling the first vehicle includes brake control, steering control, engine control, and/or combinations thereof.

4. The method of Claims 2 or 3, further comprising the step of transmitting to the second vehicle and/or other vehicle, safety data representative of at least the action taken to control the first vehicle to obviate or reduce the severity of the hazardous condition.

5. The method of Claims 1-4, further comprising the step of transmitting a request for safety data from a vehicle in proximity of the first vehicle corresponding to the first vehicle maneuver.

6. A method of avoiding a hazardous condition between a first vehicle trailing a second vehicle, each having a safety system capable of transmitting and receiving safety data, the method comprising the steps of:
monitoring a set of safety data of the first vehicle, the set of safety data being generated by a plurality of sensors associated with the first vehicle;
receiving safety data from the second vehicle indicative of deceleration;
processing the received data in conjunction with the set of first vehicle safety data, the processed data indicating the presence of a hazardous condition; and
transmitting a signal to the vehicle operator of the second vehicle of the hazardous condition created by the safety data received by the first vehicle so that corrective action can be taken by the second vehicle.

7. The method of Claim 6, further comprising controlling the first vehicle to obviate or reduce the severity of the hazardous condition, wherein controlling the first vehicle includes brake control, steering control, engine control, and/or combinations thereof.

8. The method of Claim 7, further comprising the step of alerting the operator of the first vehicle of the hazardous condition via one or more output devices, wherein the output devices are selected from a group consisting of audible devices, visual devices, and haptic devices.

9. The method of Claims 6-8, wherein the plurality of sensors are selected from a group consisting of radar, lidar, optical sensors, ultrasonic sensors, active and passive infrared sensors, radio frequency (RF) sensors, camera sensors, brake sensors, a throttle sensor, a suspension sensor, tire pressure sensors, vehicle inertial sensor(s), a wheel speed sensor, a vehicle speed sensor, a seat belt sensor, accelerometers, and a steering angle sensor.

10. The method of Claims 6-9, further comprising
if corrective action is taken by the first vehicle, then transmitting a signal to the second vehicle indicative of the action taken by the first vehicle.

11. A method of avoiding a hazardous condition between a first vehicle trailing a second vehicle, each having a safety system capable of transmitting and receiving safety data, the method comprising the steps of:
monitoring a set of safety data of the first vehicle, the set of safety data being generated by a plurality of sensors associated with the first vehicle;
receiving safety data from the second vehicle indicative of deceleration;
processing the received data in conjunction with the set of first vehicle safety data, the processed data indicating the presence of a hazardous condition; and
transmitting a signal to the vehicle operator of the first vehicle of the hazardous condition created by the safety data so that corrective action can be taken by the first vehicle.

12. The method of Claim 11, further comprising the step of transmitting a signal to the vehicle operator of the second vehicle of the hazardous condition so that corrective action can be taken by the second vehicle.

13. The method of Claims 11 or 12, wherein the signal to the vehicle operator of the first vehicle of the hazardous condition is an audible, visual, and/or haptic signal.

14. The method of Claims 11-13, further comprising the step of controlling the first vehicle to obviate or reduce the severity of the hazardous condition, wherein controlling the first vehicle includes brake control, steering control, engine control, and/or combinations thereof.

15. The method of Claims 11-14, further comprising:
if corrective action is taken by the first vehicle, then transmitting a signal to the second vehicle indicative of the action taken by the first vehicle.
